# EUROPÄISCHE PATENTANMELDUNG

(11) **EP 4 148 519 A1**
(43) Veröffentlichungstag der Anmeldung: **15.03.2023**
(21) Anmeldenummer: 22167702.4
(22) Anmeldetag: 11.04.2022
(51) Int. Cl.: G05B 23/02

(54) **VERFAHREN UND VORRICHTUNGEN FÜR PROZESSVENTIL-EINHEITEN**

(30) Priorität: 16.06.2021 DE 102021115589
(71) Anmelder: Gemü Gebr. Müller Apparatebau GmbH & Co. Kommanditgesellschaft, 74653 Ingelfingen (DE)
(72) Erfinder: Höfs, Daniel, 74653 Künzelsau (DE)
(74) Vertreter: DREISS Patentanwälte PartG mbB

(57) **Zusammenfassung**

Es wird ein Verfahren bereitgestellt, welches umfasst: Ermitteln, mittels einer Aufzeichnungsfunktion (102a-b), von wenigstens einer mit einer Prozessventil-Einheit (100) assoziierten Sensorsignal-Aufnahme (RECa-b) in Abhängigkeit von einem Sensorsignal (Sa-b), welches von wenigstens einem dauerhaft oder zeitweise der Prozessventil-Einheit (100) zugeordneten Sensor (104a-b) erzeugt wird; Ermitteln, mittels einer Mehrzahl von vorab konfigurierten Funktionen (106a-z), einer Mehrzahl von Sensorsignal-Parametern (Paz), welche das wenigstens eine Sensorsignal (Sa-b) charakterisieren, in Abhängigkeit von der wenigstens einen Sensorsignal-Aufnahme (RECa-b); und Versenden, mittels einer Ausgangsschnittstelle (108), der Mehrzahl von Sensorsignal-Parametern (Pa-z).

## Beschreibung

Die Erfindung betrifft Fortschritte im Bereich der Prozessventile, insbesondere im Bereich der Erkennung von Anomalien beim Betrieb von Prozessventilen.

Das der Erfindung zugrundeliegende Problem wird durch Verfahren und Vorrichtungen gemäß den unabhängigen Ansprüchen gelöst.

Ein erster Aspekt der Beschreibung betrifft ein Verfahren, das umfasst: Ermitteln, mittels einer Aufzeichnungsfunktion, von wenigstens einer mit einer Prozessventil-Einheit assoziierten Sensorsignal-Aufnahme in Abhängigkeit von einem Sensorsignal, welches von wenigstens einem dauerhaft oder zeitweise der Prozessventil-Einheit zugeordneten Sensor erzeugt wird; Ermitteln, mittels einer Mehrzahl von vorab konfigurierten Funktionen, einer Mehrzahl von Sensorsignal-Parametern, welche das wenigstens eine Sensorsignal charakterisieren, in Abhängigkeit von der wenigstens einen Sensorsignal-Aufnahme; und Versenden, mittels einer Ausgangsschnittstelle, der Mehrzahl von Sensorsignal-Parametern.

Vorteilhaft kann durch die Ermittlung der Mehrzahl von Sensorsignal-Parametern gemäß der Vorabkonfiguration auf das Übermitteln der Sensorsignale selbst verzichtet werden. Vielmehr werden lediglich die den Ventilbetrieb charakterisierenden Sensorsignal-Parameter versendet. Des Weiteren wird die Rechenkapazität für die Funktionen reduziert, da die Vorabkonfiguration es ermöglicht, die Datenerzeugung bereits auf der Seite der Prozessventil-Einheit zu reduzieren. Eine Überwachung einer Vielzahl von Ventileinheiten wird dadurch erst möglich, da die notwendige Übertragungskapazität und die notwendige Rechenkapazität reduziert wird. Die Vorabkonfiguration erlaubt vorteilhaft eine Anpassung an das beispielsweise zentral hinterlegte Auswertemodell. In anderen Worten bereiten die konfigurierten Funktionen die Sensorsignal-Parameter passend zu dem zentral hinterlegten Modell auf.

Ein vorteilhaftes Beispiel zeichnet sich dadurch aus, dass die Mehrzahl von vorab konfigurierten Funktionen mittels wenigstens eines jeweiligen vorab konfigurierten Ermittlungsparameters parametriert sind.

Durch die Ermittlungsparameter wird eine flexible Umgebung bereitgestellt, in der automatisiert die Funktionen ein- und ausgeschaltet sowie parametriert werden können. Damit wird eine einheitliche Konfigurationsschnittstelle bereitgestellt, die die Bedatung der ventilseitigen Vorrichtung zur Ermittlung der Sensorsignal-Parameter vereinfacht.

Ein vorteilhaftes Beispiel zeichnet sich dadurch aus, dass eine Kennung mit den vorab konfigurierten Funktionen bzw. deren Konfiguration assoziiert ist, und dass die Kennung gemeinsam mit der Mehrzahl von Sensorsignal-Parametern versendet wird.

Vorteilhaft lässt sich so auf der Empfängerseite das Modell zur Ermittlung eines Anomalie-Indikators identifizieren und die korrekte Verarbeitung der Sensorsignal-Parameter wird sichergestellt.

Ein vorteilhaftes Beispiel zeichnet sich dadurch aus, dass das Verfahren umfasst: Empfangen, mittels einer Eingangsschnittstelle, eines Anomalie-Indikators als Antwort auf den Versand der Mehrzahl von Sensorsignal-Parametern.

Vorteilhaft kann so beispielsweise ein Betrieb der Prozessventil-Einheit eingeschränkt werden, beispielsweise die Zahle der zulässigen Schaltungen begrenzt werden. Des Weiteren kann eine an der Prozessventil-Einheit angeordnete Warnlampe erleuchten, wenn der Anomalie-Indikator eine Anomalie indiziert. Indiziert der Anomalie-Indikator hingegen keine Betriebsanomalie, dann erlischt die Warnlampe bzw. bleibt ausgeschaltet.

Ein zweiter Aspekt der Beschreibung betrifft eine Vorrichtung umfassend: eine Aufzeichnungsfunktion zur Ermittlung von wenigstens einer mit einer Prozessventil-Einheit assoziierten Sensorsignal-Aufnahme in Abhängigkeit von einem Sensorsignal, welches von wenigstens einem dauerhaft oder zeitweise der Prozessventil-Einheit zugeordneten Sensor erzeugt wird;
eine Mehrzahl von vorab konfigurierten Funktionen zur Ermittlung einer Mehrzahl von Sensorsignal-Parametern, welche das wenigstens eine Sensorsignal charakterisieren, in Abhängigkeit von der wenigstens einen Sensorsignal-Aufnahme; und eine Ausgangsschnittstelle zum Versenden der Mehrzahl von Sensorsignal-Parametern.

Ein dritter Aspekt der Beschreibung betrifft ein Verfahren umfassend: Empfangen, mittels einer Eingangsschnittstelle, einer Mehrzahl von Sensorsignal-Parametern, welche wenigstens ein Sensorsignal charakterisieren, welches von wenigstens einem dauerhaft oder zeitweise einer Prozessventil-Einheit zugeordneten Sensor erzeugt wurde; Ermitteln, mittels eines maschinen-gelernten Modells, eines Anomalie-Indikators, welcher eine mit dem Betrieb der Prozessventil-Einheit assoziierte Anomalie indiziert, in Abhängigkeit von den empfangenen Sensorsignal-Parametern; und Versenden, mittels einer Ausgangsschnittstelle, des ermittelten Anomalie-Indikators.

Vorteilhaft wird damit ein zentral hinterlegbares Modell zur Anomalieerkennung bereitgestellt, das für wenigstens einen Typ von Prozessventil-Einheit eine Vorhersage über eine Anomalie während des Betriebes der Prozessventil-Einheit ermöglicht.

Ein vorteilhaftes Beispiel zeichnet sich dadurch aus, dass das Ermitteln des Anomalie-Indikators umfasst: Propagieren der Mehrzahl von Sensorsignal-Parametern durch das gelernte Modell in Form eines künstlichen neuronalen Netzes, wobei die Sensorsignal-Parameter in einem Eingabebereich des Modells bereitgestellt werden, wobei in einem Ausgabebereich des Modells eine Vorhersage bereitgestellt wird; und Ermitteln, mittels eines Klassifizierers, des Anomalie-Indikators in Abhängigkeit von der Vorhersage.

Das künstliche neuronale Netz ist einfach trainierbar und liefert über die Vorhersage und den Klassifizierer bei passender Vorauswahl in Form der Konfiguration der Funktionen ein nachvollziehbares Ergebnis für den Anomalie-Indikator. Gleichzeitig wird die notwendige Übertragungskapazität für das Übermitteln der Sensorsignal- Parameter und des Anomalie-Indikators reduziert. Darüber hinaus muss ventilseitig keine überdimensioniert große und teure Auswerteelektronik vorgehalten werden. Folglich wird eine kostengünstige und gleichzeitig präzise Anomalieerkennung realisiert.

Ein vorteilhaftes Beispiel zeichnet sich dadurch aus, dass eine Kennung gemeinsam mit der Mehrzahl von Sensorsignal-Parametern versendet wird, und wobei das Modell für die Ermittlung des Anomalie-Indikators über die Kennung ausgewählt wird.

Über die Kennung wird vorteilhaft die zu der Vorverarbeitung passende Wahl für das Modell getroffen. Ein vierter Aspekt der Beschreibung betrifft eine Vorrichtung umfassend: eine Eingangsschnittstelle zum Empfangen einer Mehrzahl von Sensorsignal-Parametern, welche wenigstens ein Sensorsignal charakterisieren, welches von wenigstens einem dauerhaft oder zeitweise einer Prozessventil-Einheit zugeordneten Sensor erzeugt wurde; ein maschinen-gelerntes Modell zur Ermittlung eines Anomalie-Indikators, welcher eine mit dem Betrieb der Prozessventil-Einheit assoziierte Anomalie indiziert, in Abhängigkeit von den empfangenen Sensorsignal-Parametern; und eine Ausgangsschnittstelle zum Versenden des ermittelten Anomalie-Indikators.

Ein fünfter Aspekt der Beschreibung betrifft ein Verfahren umfassend: Bereitstellen von wenigstens einer mit einer Prozessventil-Einheit assoziierten Sensorsignal-Aufnahme, welche ein Sensorsignal repräsentiert, welches von wenigstens einem dauerhaft oder zeitweise der Prozessventil-Einheit zugeordneten Sensor erzeugt wurde; Ermitteln, mittels einer Mehrzahl von Funktionen, einer Mehrzahl von Sensorsignal-Parametern, die die wenigstens eine Sensorsignal-Aufnahme charakterisieren, in Abhängigkeit von der wenigstens einen Sensorsignal-Aufnahme; Bereitstellen, der Mehrzahl von Sensorsignal-Parametern; Empfangen einer Mehrzahl von mit den Funktionen assoziierten Ermittlungsparametern; Ermitteln einer Konfiguration für mit der Prozessventil-Einheit assoziierten Funktionen in Abhängigkeit von den Ermittlungsparametern; und Ermitteln eines Modells zur Ermittlung eines Anomalie-Indikators in Abhängigkeit von den Ermittlungsparametern.

Vorteilhaft wird so ein Expertensystem bereitgestellt, mit dem der Entwicklungsingenieur die Sensorsignale selbstständig auswerten kann und eine entsprechende Konfiguration erzeugen kann. Dadurch wird der Entwicklungsprozess abgekürzt und sowohl das Modell als auch die ventilseitige Vorrichtung zur Ermittlung der Sensorsignalparameter kann automatisiert werden.

In anderen Worten können Ingenieure eine Auswertungssoftware 'mitentwickeln', ohne dass konkretes Wissen in Bezug auf IT/Data-Science mitgebracht werden muss.

Ein vorteilhaftes Beispiel zeichnet sich dadurch aus, dass die Ermittlungsparameter der jeweiligen Funktion eine Gewichtung eines von der Funktion erzeugten Wertes umfassen.

Mit der Gewichtung wird die Relevanz der Werte für den Eingang des Modells festgelegt. Ist die Gewichtung beispielsweise nahe null oder bei null kann die Funktion auf der Seite der Prozessventil-Einheit deaktiviert werden, womit nur potenziell relevante Daten zur Ermittlung des Anomalie-Indikators übermittelt werden.

Ein vorteilhaftes Beispiel zeichnet sich dadurch aus, dass das Bereitstellen ein Bereitstellen der Mehrzahl von Sensorsignal-Parametern, welche wenigstens zu einem Teil unterschiedliche Sensorsignale, die zu unterschiedlichen Zeiten aufgenommen wurden, charakterisieren, umfasst.

Vorteilhaft kann dadurch ein visueller Vergleich verschiedener Zustände der Prozessventil-Einheit erfolgen. Damit wird die Arbeit des Entwicklungsingenieurs erleichtert, um zu dem gewünschten Modell und der gewünschten Konfiguration der ventilseitigen Vorrichtung bzw. Konfiguration der Sensorik zu gelangen.

Ein vorteilhaftes Beispiel zeichnet sich dadurch aus, dass das Ermitteln des Modells umfasst: Bereitstellen einer Mehrzahl von manuell mit einem Indikator, insbesondere einem Anomalie-Indikator, verknüpften Sensorsignal-Aufnahmen; Ermitteln, mittels der gemäß den Ermittlungsparametern konfigurierten Funktionen, einer Mehrzahl von Sensorsignal-Parametern in Abhängigkeit von den Sensorsignal-Aufnahmen; maschinelles Trainieren des Modells mit Trainingsdaten, welche die Mehrzahl von Sensorsignal-Parametern und damit assoziierte Indikatoren, insbesondere Anomalie-Indikatoren, umfassen.

Vorteilhaft können vorklassifizierte bzw. gelabelte Trainingsdaten zum Trainieren des Modells verwendet werden. Die Funktionen werden so vor dem Betrieb der ventilseitigen Vorrichtung angepasst.

Ein sechster Aspekt der Beschreibung betrifft eine Vorrichtung umfassend: Mittel zum Bereitstellen von wenigstens einer mit einer Prozessventil-Einheit assoziierten Sensorsignal-Aufnahme, welche ein Sensorsignal repräsentiert, welches von wenigstens einem dauerhaft oder zeitweise der Prozessventil-Einheit zugeordneten Sensor erzeugt wurde; einer Mehrzahl von Funktionen zum Ermitteln einer Mehrzahl von Sensorsignal-Parametern, die die wenigstens eine Sensorsignal-Aufnahme charakterisieren, in Abhängigkeit von der wenigstens einen Sensorsignal-Aufnahme; Mittel, zum Bereitstellen der Mehrzahl von Sensorsignal-Parametern; Mittel zum Empfangen einer Mehrzahl von mit den Funktionen assoziierten Ermittlungsparametern; Mittel zum Ermitteln einer Konfiguration für mit der Prozessventil-Einheit assoziierten Funktionen in Abhängigkeit von den Ermittlungsparametern; und Mittel zum Ermitteln eines Modells zur Ermittlung eines Anomalie-Indikators in Abhängigkeit von den Ermittlungsparametern.

In der Zeichnung zeigen:
- Figur 1: ein schematisches Blockdiagram zur Ermittlung von Sensorsignal-Parametern;
- Figur 2a: ein schematisches Ablaufdiagramm unter anderem zur Ermittlung einer Konfiguration von Funktionen zur Ermittlung der Sensor-Signal Parameter;
- Figur 2b: eine schematisch dargestellte Bildschirmdarstellung zur Bearbeitung durch einen Ingenieur;
- Figur 3: ein schematisches Blockdiagramm zum Trainieren eines Modells;
- Figur 4: ein schematisches Blockdiagramm zum Ermitteln eines Anomalie-Indikators; und
- Figur 5: ein Beispiel für die Anordnung von in Figur 1 und Figur 4 gezeigten Vorrichtungen.

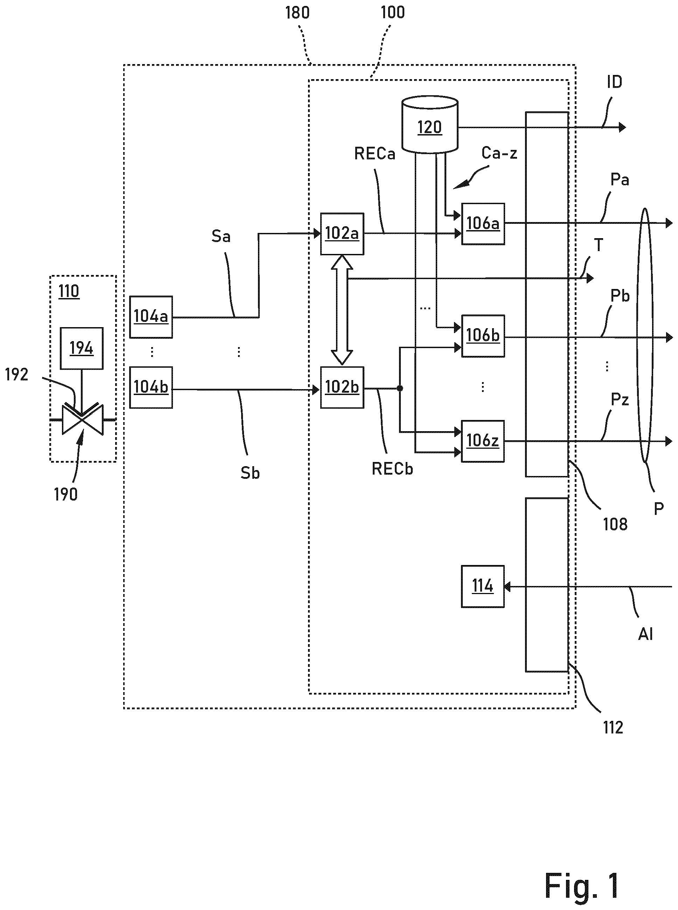

Figur 1 zeigt in einem schematischen Blockschaltbild eine Prozessventil-Einheit 110 und eine Vorrichtung 100.

Eine Aufzeichnungsfunktion 102a-b ermittelt jeweils wenigstens eine mit der Prozessventil-Einheit 100 assoziierte Sensorsignal-Aufnahme RECa-b in Abhängigkeit von einem Sensorsignal Sa-b. Das Sensorsignal Sa-b wird bzw. wurde von wenigstens einem dauerhaft oder zeitweise der Prozessventil-Einheit 100 zugeordneten Sensor 104a-b erzeugt. Die Sensoren 104a-b erfassen beispielsweise: Vibrationen, Schall, Druck, Temperatur, Feuchtigkeit, etc. Die Aufzeichnungsfunktionen 102a-b nehmen über einen vorab konfigurierten Zeitraum T das jeweilige Sensorsignal Sa-b auf. Der Zeitraum T kann fest gewählt werden oder ist auf dem Speicher 120 hinterlegt. In einem Beispiel wird der Zeitraum T gemeinsam mit den Sensorsignal-Parametern Pa-z versendet, um als Eingang für das Modell zur Ermittlung des Anomalie-Indikators zu dienen.

Eine Mehrzahl von vorab konfigurierten Funktionen 106a-z ist vorgesehen, um eine Mehrzahl von Sensorsignal-Parametern Pa-z zu ermitteln, welche das wenigstens eine Sensorsignal Sa-b charakterisieren. Die Sensorsignal-Parameter Pa-z werden in Abhängigkeit von der wenigstens einen Sensorsignal-Aufnahme RECa-b ermittelt.

Mittels einer Ausgangsschnittstelle 108 wird die Mehrzahl von Sensorsignal-Parametern Pa-z versandt.

Die Prozess-Ventileinheit 110 umfasst wenigstens folgende Komponenten: ein Ventil 190 umfassend einen Ventilkörper, durch den Prozessfluid fließt; ein vorliegend beispielhaft als Ventilmembran dargestelltes Absperrmitttel 192, welches mit einem Ventilsitz in dem Ventilkörper zusammenwirkt; und einen Ventilantrieb 194, der das Absperrmittel 192 beispielsweise entlang einer Stellachse bewegt.

Ermittlungsparameter Ca-z sind gemeinsam mit der Kennung ID in permanent auslesbarer Form einem Datenspeicher 120 hinterlegt. Beim Betrieb der Vorrichtung 100 werden die Ermittlungsparameter Ca-z geladen und die Funktionen 106a-z in Abhängigkeit von dem jeweiligen Ermittlungsparameter Caz parametriert. Alternativ sind die Funktionen 106a-z selbst zumindest teilweise als auf der Vorrichtung 100 bzw. einem zugeordneten Prozessor ausführbarer Computerprogrammcode auf dem Datenspeicher 120 hinterlegt. Der Ermittlungsparameter Ca-z für die assoziierte Funktion 106a-z umfasst beispielsweise: einen Passbereich für Frequenzen des Sensorsignals und/oder eine Gewichtung eines Ergebnisses der Funktion.

In einem Beispiel ist die Vorrichtung 100 gemeinsam mit den Sensoren 104a-b auf einer gemeinsamen Leiterplatte 180 ausgeführt. In einem anderen Beispiel ist die Vorrichtung 100 auf einer Leiterplatte ausgeführt, jedoch wenigstens einer der Sensoren 104a-b ist getrennt von der Leiterplatte angeordnet.

In einem Beispiel befindet sich die Vorrichtung 100 zumindest teilweise innerhalb eines Gehäuses der Prozessventil-Einheit 110.

Eine Kennung ID ist beispielsweise mit den vorab konfigurierten Funktionen 106a-z bzw. deren Konfiguration assoziiert. Die Kennung ID wird gemeinsam mit der Mehrzahl von Sensorsignal-Parametern Pa-z versendet.

Gemäß einem Beispiel wird mittels einer Eingangsschnittstelle 112, der Anomalie-Indikator AI als Antwort auf den Versand der Mehrzahl von Sensorsignal-Parametern Pa-z empfangen. Mittels einer Bereitstellungseinheit 114, beispielsweise mittels einer nach außen sichtbaren Warnlampe, wird der Anomalie-Indikator AI bereitstellt. Selbstverständlich sind weitere Aktionen wie die Alarmierung eines Wartungspersonals oder einen Nothalt des Prozesses in Abhängigkeit von der bereitgestellten Anomalie-Indikation AI denkbar.

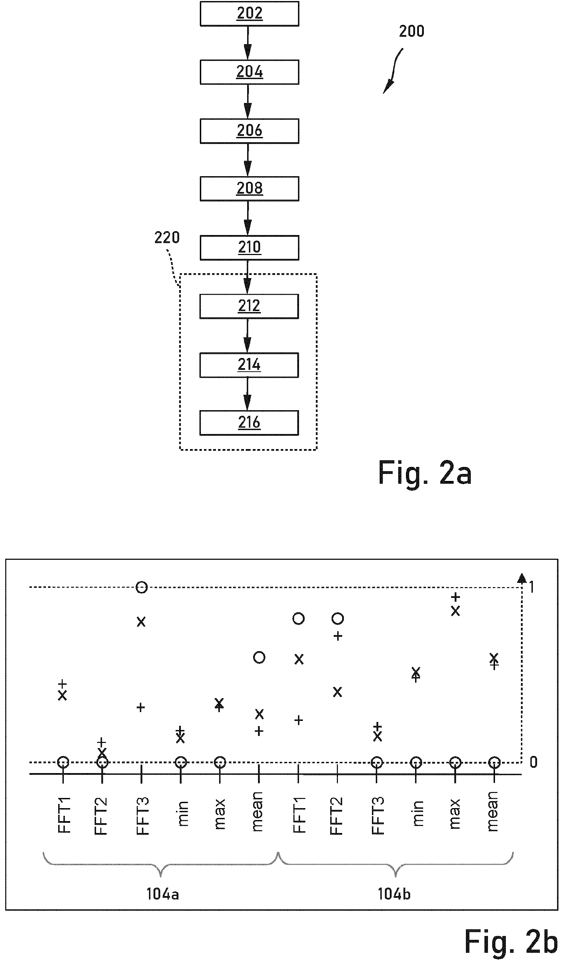

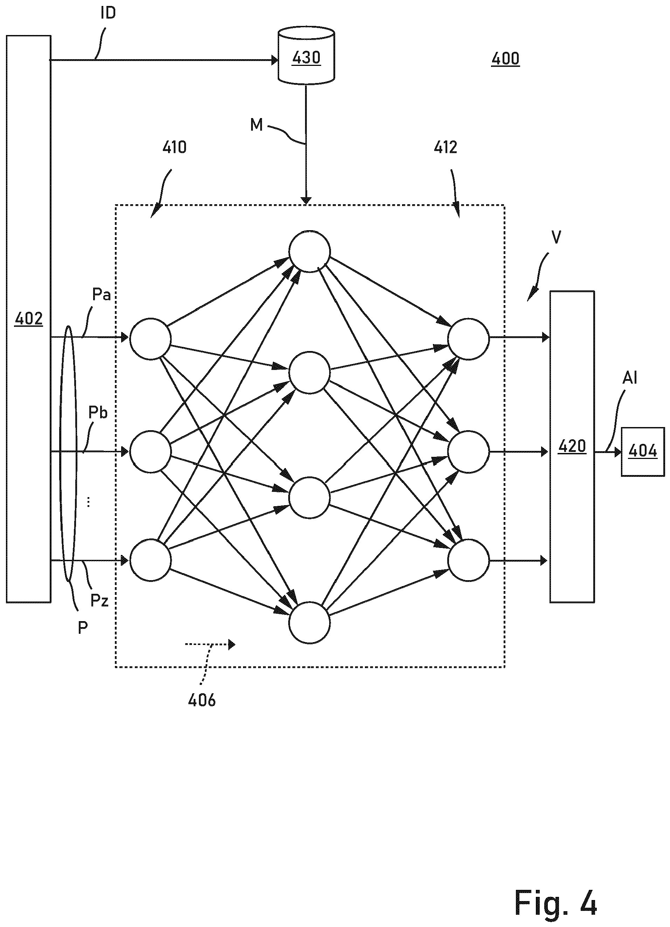

Figur 2a zeigt in einem schematischen Ablaufdiagramm ein Verfahren zum Ermitteln sowohl der Konfiguration der Vorrichtung 100 aus Figur 1 als auch der Ermittlung des Modells M aus der nachfolgenden Figur 4. Das Verfahren kann durch eine Vorrichtung 200 ausführt werden.

So umfasst die Vorrichtung 200 Mittel 202 zum Bereitstellen von wenigstens einer mit einer Prozessventil-Einheit 100 assoziierten Sensorsignal-Aufnahme RECa-b. Eine Mehrzahl von Funktionen 200 bzw. 106a-z, analog zu dem Vorgehen nach Figur 1, dient zum Ermitteln einer Mehrzahl von Sensorsignal-Parametern Pa-z, die die wenigstens eine Sensorsignal-Aufnahme RECa-b charakterisieren, in Abhängigkeit von der wenigstens einen Sensorsignal-Aufnahme RECa-b.

Mittel 206, beispielsweise eine Benutzerschnittstelle umfassend einen Monitor als Ausgabegerät und eine Tastatur und Maus als Eingabegerät, zum Bereitstellen der Mehrzahl von Sensorsignal-Parametern Pa-z (siehe Figur 2b). Nach der Bearbeitung durch einen Benutzer empfangen Mittel 208, beispielsweise die Benutzerschnittstelle, eine Mehrzahl von mit den Funktionen 106a-z assoziierten Ermittlungsparametern Ca-z, wobei beispielsweise ein Teil der Mehrzahl von Funktionen ausgewählt ein anderer Teil nicht ausgewählt ist.

Das Bereitstellen 206 umfasst in einem Beispiel (siehe Figur 2B) ein Bereitstellen der Mehrzahl von Sensorsignal-Parametern Pa-z, welche wenigstens zu einem Teil unterschiedliche Sensorsignale Sa-b, die zu unterschiedlichen Zeiten aufgenommen wurden, charakterisieren.

Des Weiteren sind Mittel 210 zum Ermitteln einer Konfiguration für mit der Prozessventil-Einheit 110 assoziierten, also im Betrieb nahe an der Prozessventil-Einheit 100 ausgeführten Funktionen 106a-z vorgesehen, wobei die Konfiguration in Abhängigkeit von den Ermittlungsparametern Ca-z ermittelt wird und im einfachsten Beispiel einen Datensatz umfassend die Mehrzahl der Ermittlungsparameter für die Funktionen umfasst. In einem anderen Beispiel werden einzelne Funktionen aktiv abgewählt und werden damit nicht Teil der Konfiguration. Die Ermittlungsparameter Ca-z der jeweiligen Funktion 106a-z umfassen beispielsweise eine Gewichtung eines von der Funktion 106a-z erzeugten Wertes.

Mittel 220 zum Ermitteln eines Modells M dienen zur Ermittlung des Anomalie-Indikators AI in Abhängigkeit von den Ermittlungsparametern Ca-z bzw. in Abhängigkeit von mittels den Entwicklungsparametern Ca-z ermittelten Sensorsignal-Parametern Pa-z.

Das Ermitteln 220 des Modells M umfasst ein Bereitstellen 212 einer Mehrzahl von manuell mit einem Indikator, insbesondere einem Anomalie-Indikator, verknüpften, d.h. gelabelten bzw. manuell klassifizierten Sensorsignal-Aufnahmen RECa-b. Mittels der gemäß den Ermittlungsparametern Ca-z konfigurierten Funktionen 106a-z wird gemäß Schritt 214 eine Mehrzahl von Sensorsignal-Parametern Pa-z in Abhängigkeit von den Sensorsignal-Aufnahmen RECa-b ermittelt. Anschließend erfolgt ein maschinelles Trainieren 216 des Modells M mit Trainingsdaten, welche die Mehrzahl von Sensorsignal-Parametern Pa-z und damit assoziierte Indikatoren, insbesondere Anomalie-Indikatoren AI, umfassen. Die Klassifizierung der Mehrzahl von Sensorsignal-Parametern Pa-z erfolgt beispielsweise mit der Benutzerschnittstelle, die es den Benutzer ermöglicht, verschiedene Sensorsignal-Aufnahmen beispielsweise von funktionierenden und mangelbehafteten Prozessventil-Einheiten miteinander zu vergleichen.

In der Figur 2b werden die Sensorsignal-Parameter mittels Funktionen 106a-z aus Figur 1 bereitgestellt. Die Funktionen 106a-z umfassen beispielsweise Filter, die für einen jeweiligen Sensortyp angepasst sind. Da sich beispielsweise Temperaturen Feuchtigkeit üblicherweise nur sehr langsam ändern, kommen andere Filter zum Einsatz als beispielsweise bei gemessenen Vibrationen oder Schall. Entsprechend können sich die angezeigten Sensorsignal-Parameter von Sensortyp zu Sensortyp unterscheiden.

Figur 2b zeigt in schematischer Form den Schritt 206 aus Figur 2a zur geführten Ermittlung der Gewichtungen für die einzelnen Funktionen, wobei die Gewichtungen als 'O' gekennzeichnet sind. Als Sensorsignal-Parameter werden für die jeweiligen Sensoren 104a-b beispielhaft angeführt: maximale Beträge FFT1, FFT2, FFT3 der schnellen FourierTransformation der jeweiligen Sensorsignal-Aufnahme in jeweiligen voneinander unterschiedlichen Frequenzbereichen; ein Minimum min, ein Maximum max und ein arithmetisches Mittelwert mean der jeweiligen Sensorsignal-Aufnahme.

Die Sensorsignal-Parameter, die mit einem Normalbetrieb ohne Anomalie assoziiert sind, sind mit einem 'x' gekennzeichnet. Die Sensorsignal-Parameter, die mit einer Anomalie verknüpft sind, sind mit einem '+' gekennzeichnet. Der Entwicklungsingenieur kann nun auf einen Blick die Abweichungen der beiden Sensorsignal-Parameter-Sets erkennen, und zwar bei den Sensorsignal-Parametern FFT3 und mean in Bezug auf den Sensor 104a und bei den Sensorsignal-Parametern FFT1, FFT2 in Bezug auf den Sensor 104b. Entsprechen kann eine Gewichtung 'o' der Sensorsignal-Parameter angepasst werden. Bei einer Gewichtung 'o' von Null wird die entsprechende Funktion in der Vorrichtung 100 aus Figur 1 deaktiviert und ein Eingang des Modells M in Figur 4 nicht vorgesehen.

In der Figur 2b werden die Sensorsignal-Parameter mittels Funktionen 106a-z aus Figur 1 bereitgestellt. Die Funktionen 106a-z umfassen beispielsweise Filter, die für einen jeweiligen Sensortyp angepasst sind. Da sich beispielsweise Temperaturen Feuchtigkeit üblicherweise nur sehr langsam ändern, kommen andere Filter zum Einsatz als beispielsweise bei gemessenen Vibrationen oder Schall. Entsprechend können sich die angezeigten Sensorsignal-Parameter von Sensortyp zu Sensortyp unterscheiden.

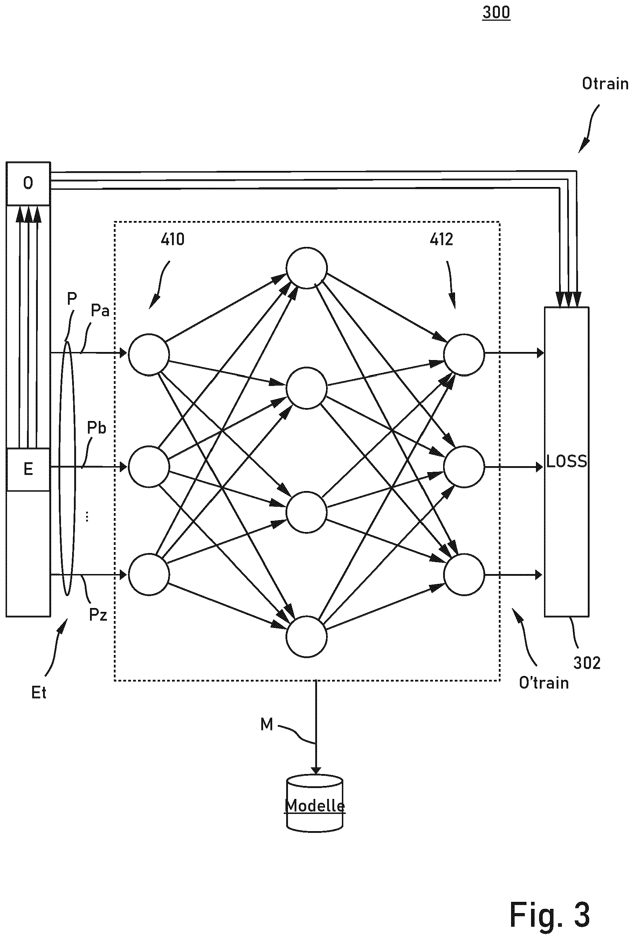

Eine Vorrichtung 300 für das Training des Modells M ist in Figur 3 dargestellt. Trainingsdaten Et werden in Form von Sensorsignal-Parametern bereitgestellt.

Die Anordnung umfasst das künstliche neuronale Netzwerk mit einer Eingangsschicht 410. Für einen Zeitschritt i wird ein Eingangstensor der Eingabe E an die Eingangsschicht übergeben. Zur Eingabe E wird die Ausgabe O in Form einer Klassifikation bzw. Vorhersage, die beispielsweise die Anomalie oder einen Normalbetrieb ohne Anomalie indiziert, dafür bestimmt oder ist vorbekannt. Aus der Ausgabe O wird im Zeitschritt i ein Tensor mit beobachteten Werte Otrain bestimmt, die den beobachteten Werten des Tensors Et zugeordnet sind. Jeder der Zeitreihen der Eingabe E ist einer von drei Eingangsknoten zugeordnet. In einem Vorwärtspfad des künstlichen neuronalen Netzwerks folgt auf die Eingangsschicht wenigstens eine verborgene Schicht. Eine Anzahl Knoten der wenigstens einer verborgenen Schicht ist im Beispiel größer, als eine Anzahl der Eingangsknoten. Diese Anzahl ist als Hyperparameter zu betrachten und wird vorzugsweise separat bestimmt. Im Beispiel sind in der verborgenen Schicht vier Knoten vorgesehen. Das künstliche neuronale Netz wird beispielsweise durch das Verfahren gemäß dem Gradientenabstieg in Form von Backpropagation gelernt. Das Training des Modells M erfolgt also überwacht.

Im Vorwärtspfad ist im Beispiel nach der wenigstens einen verborgenen Schicht eine Ausgangsschicht 412 vorgesehen. An der Ausgangsschicht 412 werden Vorhersage-Werte ausgegeben. Im Beispiel ist jedem Vorhersage-Wert ein Ausgangsknoten zugeordnet.

In jedem Zeitschritt i wird ein Tensor O'train bestimmt, in dem die Vorhersage-Werte für diesen Zeitschritt i enthalten sind. Dieser wird im Beispiel zusammen mit dem Spaltenvektor der beobachteten Werte Otrain einer Trainingseinrichtung 302 zugeführt. Die Trainingseinrichtung 302 ist im Beispiel ausgebildet, einen Vorhersage-Fehler mittels einer Loss-Funktion LOSS, insbesondere mittels eines Mean Square Errors, zu bestimmen, und das Modell M damit und mittels eines Optimierers, insbesondere eines Adam Optimierers, zu trainieren. Die Loss-Funktion LOSS wird im Beispiel abhängig von einer Abweichung, insbesondere dem Mean Square Error aus den Werten des Tensors der beobachteten Werte Otrain und dem Tensor der Vorhersage-Werte O'train bestimmt.

Das Training wird abgebrochen, sobald ein festgesetztes Kriterium erreicht ist. Im Beispiel wird das Training abgebrochen, wenn der Loss über mehrere Zeitschritte hinweg nicht mehr sinkt, d.h. insbesondere der Mean Square Error nicht geringer wird.

Anschließend werden Testdaten in das so trainierte Modell M eingegeben. Das Modell M wird durch das Training mit den Trainingsdaten generiert. Das Modell wird mit den Testdaten insbesondere hinsichtlich Mittelwert µ und Kovarianz Σ ausgewertet.

Figur 4 zeigt eine Vorrichtung 400 zur Ermittlung des Anomalie-Indikators AI. Eine Eingangsschnittstelle 402 dient zum Empfangen der Mehrzahl von Sensorsignal-Parametern Pa-z.

Ein maschinen-gelerntes Modell M wird zur Ermittlung des Anomalie-Indikators AI verwendet, welcher eine mit dem Betrieb der Prozessventil-Einheit 110 assoziierte Anomalie indiziert. Der Anomalie-Indikator AI wird in Abhängigkeit von den empfangenen Sensorsignal-Parametern Pa-z ermittelt.

Eine Ausgangsschnittstelle 404 dient zum Versenden des ermittelten Anomalie-Indikators AI.

Es erfolgt ein Propagieren 406 der Mehrzahl von Sensorsignal-Parametern Pa-z durch das gelernte Modell M in Form eines künstlichen neuronalen Netzes. Die Sensorsignal-Parameter Pa-z werden hierzu in einem Eingabebereich 410 des Modells M bereitgestellt, wobei in einem Ausgabebereich 412 des Modells M eine Vorhersage V bereitgestellt wird. Ein Klassifizierers 420 ermittelt den Anomalie-Indikators AI in Abhängigkeit von der Vorhersage V.

Eine Kennung ID wird gemeinsam mit der Mehrzahl von Sensorsignal-Parametern Pa-z übermittelt, wobei das Modell M für die Ermittlung des Anomalie-Indikators AI über die bzw. mittels der Kennung ID aus einer Mehrzahl von in dem Datenspeicher 430 hinterlegten Modellen ausgewählt wird.

In einem nicht gezeigten Beispiel auch die Zeitdauer T, die die hinter den Sensorsignal-Parametern P stehende Aufnahme betrifft, dem Eingangsbereich 410 des Modells M zugeführt.

Das trainierte Modell M wird verwendet, um für die bereitgestellten Sensorsignal-Parameter P die Vorhersage V für die Klassifikation bereitzustellen. Dazu werden dieselben Datenvorverarbeitungsschritte wie bei den Trainingsdaten durchgeführt. Beispielsweise erfolgt eine Skalierung und eine Bestimmung von Ein- und Ausgabedaten. Diese Bestimmung erfolgt im Beispiel während des Betriebs der Prozessventil-Einheit.

Wie für das Training beschrieben, wird für einen Zeitschritt i ein Spaltenvektor der Eingabe E in Form der bereitgestellten Sensorsignal-Parameter P an die Eingangsschicht 410 übergeben. Danach werden im Unterschied zum Training von der Klassifizierungseinrichtung bzw. dem Klassifizierer 420 abhängig von den Vorhersage-Werten V eine Klassifikation der zugeführten Sensorsignal-Parameter durchgeführt.

Ein Klassifikationsscore für die Klassifikation des Betriebs der Prozessventil-Einheit wird beispielsweise in Form des Anomalie-Indikators AI an die Ausgangsschnittstelle zur weiteren Verarbeitung auf der Seite der Prozessventil-Einheit übergeben. Der Klassifikationsscore für die Klassifikation des Objekts indiziert im Beispiel eine Anomalie, wenn dieser einen Schwellwert überschreitet und anderenfalls, dass ein Normalbetrieb vorliegt. Der Schwellwert ist vorzugsweise ein Parameter. Der Parameter wird beispielsweise mittels Maximierung eines Kriteriums, beispielsweise von Precision, Recall bestimmt. Beispielsweise wird ein Area under the Curve, AUC, oder Receiver Operating Characteristic, ROC, Kriterium benutzt.

Zur Durchführung der beschriebenen Verfahren sind insbesondere Instruktionen eines Computerprogramms vorgesehen, die das beschriebene Modell implementieren.

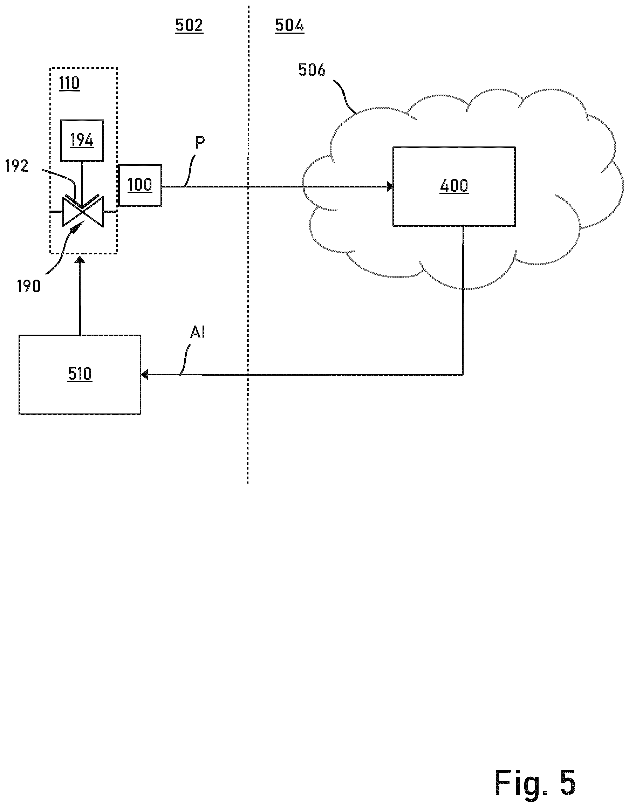

Figur 5 zeigt ein Beispiel für den Betrieb der Vorrichtung 100 und der Vorrichtung 400. Die Vorrichtung 100 ist nahe bei oder in der Prozessventil-Einheit 110 in einer Prozessanlage 502 angeordnet. Über ein Weitverkehrskommunikationsnetz werden die Sensorsignal-Parameter P an die entfernt angeordnete Vorrichtung 400 übermittelt, die beispielsweise beim Hersteller 504 der Prozessventil-Einheit 110 oder einem ihm zugeordneten Anbieter angeordnet ist. Beispielsweise wird die Vorrichtung 400 als Cloud-Service 506 bereitgestellt.

Im Unterschied zu der in Figur 1 dargestellten Ausführung wird der Anomalie-Indikator AI zusätzlich oder alternativ an eine Prozessleitstelle 510 der Prozessanlage 502 übermittelt. Entsprechend des empfangenen Anomalie-Indikators AI kann die Prozessleitstelle 510 Abhilfemaßnahmen wie Überprüfung oder Wartung der Prozessventil-Einheit 110 einleiten.

## Patentansprüche

1. Ein Verfahren umfassend:
Ermitteln, mittels einer Aufzeichnungsfunktion (102ab), von wenigstens einer mit einer Prozessventil-Einheit (100) assoziierten Sensorsignal-Aufnahme (RECa-b) in Abhängigkeit von einem Sensorsignal (Sab), welches von wenigstens einem dauerhaft oder zeitweise der Prozessventil-Einheit (100) zugeordneten Sensor (104a-b) erzeugt wird;
Ermitteln, mittels einer Mehrzahl von vorab konfigurierten Funktionen (106a-z), einer Mehrzahl von Sensorsignal-Parametern (Pa-z), welche das wenigstens eine Sensorsignal (Sa-b) charakterisieren, in Abhängigkeit von der wenigstens einen Sensorsignal-Aufnahme (RECa-b); und
Versenden, mittels einer Ausgangsschnittstelle (108), der Mehrzahl von Sensorsignal-Parametern (Pa-z).

2. Das Verfahren gemäß dem Anspruch 1, wobei die Mehrzahl von vorab konfigurierten Funktionen (106a-z) mittels wenigstens eines jeweiligen vorab konfigurierten Ermittlungsparameters (Ca-z) parametriert sind.

3. Das Verfahren gemäß einem der vorigen Ansprüche, wobei eine Kennung (ID) mit den vorab konfigurierten Funktionen (106a-z) bzw. deren Konfiguration assoziiert ist, und wobei die Kennung (ID) gemeinsam mit der Mehrzahl von Sensorsignal-Parametern (Pa-z) versendet wird.

4. Das Verfahren gemäß einem der vorigen Ansprüche umfassend:
Empfangen, mittels einer Eingangsschnittstelle (112), eines Anomalie-Indikators (AI) als Antwort auf den Versand der Mehrzahl von Sensorsignal-Parametern (Paz; und
Bereitstellen, mittels einer Bereitstellungseinheit (114) des Anomalie-Indikators (AI).

5. Eine Vorrichtung (100) umfassend:
eine Aufzeichnungsfunktion (102a-b) zur Ermittlung von wenigstens einer mit einer Prozessventil-Einheit (100) assoziierten Sensorsignal-Aufnahme (RECa-b) in Abhängigkeit von einem Sensorsignal (Sa-b), welches von wenigstens einem dauerhaft oder zeitweise der Prozessventil-Einheit (100) zugeordneten Sensor (104a-b) erzeugt wird;
eine Mehrzahl von vorab konfigurierten Funktionen (106a-z) zur Ermittlung einer Mehrzahl von Sensorsignal-Parametern (Pa-z), welche das wenigstens eine Sensorsignal (Sa-b) charakterisieren, in Abhängigkeit von der wenigstens einen Sensorsignal-Aufnahme (RECa-b); und
eine Ausgangsschnittstelle (108) zum Versenden der Mehrzahl von Sensorsignal-Parametern (Pa-z).

6. Ein Verfahren umfassend:
Empfangen, mittels einer Eingangsschnittstelle (402), einer Mehrzahl von Sensorsignal-Parametern (Pa-z), welche wenigstens ein Sensorsignal (Sa-b) charakterisieren, welches von wenigstens einem dauerhaft oder zeitweise einer Prozessventil-Einheit (100) zugeordneten Sensor (104a-b) erzeugt wurde;
Ermitteln, mittels eines maschinen-gelernten Modells (M), eines Anomalie-Indikators (AI), welcher eine mit dem Betrieb der Prozessventil-Einheit (110) assoziierte Anomalie indiziert, in Abhängigkeit von den empfangenen Sensorsignal-Parametern (Pa-z); und
Versenden, mittels einer Ausgangsschnittstelle (404), des ermittelten Anomalie-Indikators (AI).

7. Das Verfahren gemäß dem Anspruch 6, wobei das Ermitteln des Anomalie-Indikators (AI) umfasst:
Propagieren (406) der Mehrzahl von Sensorsignal-Parametern (Pa-z) durch das gelernte Modell (M) in Form eines künstlichen neuronalen Netzes, wobei die Sensorsignal-Parameter (Pa-z) in einem Eingabebereich (410) des Modells (M) bereitgestellt werden, wobei in einem Ausgabebereich (412) des Modells (M) eine Vorhersage (V) bereitgestellt wird; und
Ermitteln, mittels eines Klassifizierers (420), des Anomalie-Indikators (AI) in Abhängigkeit von der Vorhersage (V).

8. Das Verfahren gemäß einem der Ansprüche 6 bis 7, wobei eine Kennung (ID) gemeinsam mit der Mehrzahl von Sensorsignal-Parametern (Pa-z) versendet wird, und wobei das Modell (M) für die Ermittlung des Anomalie-Indikators (AI) über die Kennung (ID) ausgewählt wird.

9. Eine Vorrichtung (400) umfassend:
eine Eingangsschnittstelle (402) zum Empfangen einer Mehrzahl von Sensorsignal-Parametern (Pa-z), welche wenigstens ein Sensorsignal (Sa-b) charakterisieren, welches von wenigstens einem dauerhaft oder zeitweise einer Prozessventil-Einheit (100) zugeordneten Sensor (104a-b) erzeugt wurde;
ein maschinen-gelerntes Modell (M) zur Ermittlung eines Anomalie-Indikators (AI), welcher eine mit dem Betrieb der Prozessventil-Einheit (110) assoziierte Anomalie indiziert, in Abhängigkeit von den empfangenen Sensorsignal-Parametern (Pa-z); und
eine Ausgangsschnittstelle (404) zum Versenden des ermittelten Anomalie-Indikators (AI).

10. Ein Verfahren umfassend:
Bereitstellen (202) von wenigstens einer mit einer Prozessventil-Einheit (100) assoziierten Sensorsignal-Aufnahme (RECa-b), welche ein Sensorsignal (Sa-b) repräsentiert, welches von wenigstens einem dauerhaft oder zeitweise der Prozessventil-Einheit (100) zugeordneten Sensor (104a-b) erzeugt wurde;
Ermitteln (204), mittels einer Mehrzahl von Funktionen, einer Mehrzahl von Sensorsignal-Parametern (Pa-z), die die wenigstens eine Sensorsignal-Aufnahme (RECa-b) charakterisieren, in Abhängigkeit von der wenigstens einen Sensorsignal-Aufnahme (RECa-b);
Bereitstellen (206), der Mehrzahl von Sensorsignal-Parametern (Pa-z);
Empfangen (208) einer Mehrzahl von mit den Funktionen (106a-z) assoziierten Ermittlungsparametern (Ca-z);
Ermitteln (210) einer Konfiguration für mit der Prozessventil-Einheit (110) assoziierten Funktionen (106a-z) in Abhängigkeit von den Ermittlungsparametern (Ca-z); und
Ermitteln (220) eines Modells (M) zur Ermittlung eines Anomalie-Indikators (AI) in Abhängigkeit von den Ermittlungsparametern (Ca-z).

11. Das Verfahren gemäß dem Anspruch 10, wobei die Ermittlungsparameter (Ca-z) der jeweiligen Funktion (106a-z) eine Gewichtung eines von der Funktion (106a-z) erzeugten Wertes umfassen.

12. Das Verfahren gemäß einem der Ansprüche 10 bis 11, wobei das Bereitstellen (206) ein Bereitstellen der Mehrzahl von Sensorsignal-Parametern (Pa-z), welche wenigstens zu einem Teil unterschiedliche Sensorsignale (Sa-b), die zu unterschiedlichen Zeiten aufgenommen wurden, charakterisieren, umfasst.

13. Das Verfahren gemäß einem der Ansprüche 10 bis 12, wobei das Ermitteln (220) des Modells (M) umfasst:
Bereitstellen (212) einer Mehrzahl von manuell mit einem Indikator, insbesondere einem Anomalie-Indikator, verknüpften Sensorsignal-Aufnahmen (RECa-b) ;
Ermitteln (214), mittels der gemäß den Ermittlungsparametern (Ca-z) konfigurierten Funktionen (106a-z), einer Mehrzahl von Sensorsignal-Parametern (Pa-z) in Abhängigkeit von den Sensorsignal-Aufnahmen (RECa-b);
maschinelles Trainieren (216) des Modells (M) mit Trainingsdaten, welche die Mehrzahl von Sensorsignal-Parametern (Pa-z) und damit assoziierte Indikatoren, insbesondere Anomalie-Indikatoren (AI), umfassen.

14. Eine Vorrichtung (200) umfassend:
Mittel (202) zum Bereitstellen von wenigstens einer mit einer Prozessventil-Einheit (100) assoziierten Sensorsignal-Aufnahme (RECa-b), welche ein Sensorsignal (Sa-b) repräsentiert, welches von wenigstens einem dauerhaft oder zeitweise der Prozessventil-Einheit (100) zugeordneten Sensor (104a-b) erzeugt wurde;
einer Mehrzahl von Funktionen (200; 106a-z) zum Ermitteln einer Mehrzahl von Sensorsignal-Parametern (Pa-z), die die wenigstens eine Sensorsignal-Aufnahme (RECa-b) charakterisieren, in Abhängigkeit von der wenigstens einen Sensorsignal-Aufnahme (RECa-b);
Mittel (206), zum Bereitstellen der Mehrzahl von Sensorsignal-Parametern (Pa-z);
Mittel (208) zum Empfangen einer Mehrzahl von mit den Funktionen (106a-z) assoziierten Ermittlungsparametern (Ca-z);
Mittel (210) zum Ermitteln einer Konfiguration für mit der Prozessventil-Einheit (110) assoziierten Funktionen (106a-z) in Abhängigkeit von den Ermittlungsparametern (Ca-z); und
Mittel (220) zum Ermitteln eines Modells (M) zur Ermittlung eines Anomalie-Indikators (AI) in Abhängigkeit von den Ermittlungsparametern (Ca-z).
